# EUROPEAN PATENT APPLICATION

(11) **EP 1 974 611 A1**
(43) Date of publication of application: **01.10.2008**
(21) Application number: 07006693.1
(22) Date of filing: 30.03.2007
(51) Int. Cl.: A21D 15/02, A21D 17/00

(54) **A method or preparing, stocking and reconstituting pastry products for retail sales or for bakery chains**

(71) Applicant: Lieken Brot- und Backwaren GmbH, 49681 Garrel (DE)
(72) Inventor: Buttini, Roberto, 43100 Parma (IT); Eichner, Christian, 49681 Garrel (DE)
(74) Representative: Tönhardt, Marion

(57) **Abstract**

The invention describes a method of preparing, stocking and reconstituting pastry products for retail sales and bakery chains, comprising the steps of:
a) preparing a dough and moulding said dough;
b) baking said moulded dough until finished to obtain pastry products;
c) freezing said finished pastry products immediately after baking when their internal temperature is 70°C or above;
d) stocking said frozen pastry products;
e) processing said frozen pastry products by exposing them to infrared radiation to superficially heating said frozen pastry product;
f) leaving said processed pastry products to thaw to ambient temperature.

## Description

The invention relates to a method of preparing, stocking and reconstituting pastry products for retail sales or for bakery chains.

Commercial bakery systems have been proven useful in which pastry products are produced in large quantities in a central bakery to be distributed to retail sales outlets. The centralization of the bakery process provides costs control, uniformity of product quality and eliminate the need for space consuming equipment and skilled personal at the retail sales outlets. One of the problems, however, is the comparatively short shelf life of the pastry foods, so that a daily fresh claim is desired to ensure a high level quality of pastry products which is comparable to that achieved by bakery stores. However, to deliver nationwide on a daily fresh basis would mean to build several plants in order to expedite logistic.

Currently available technologies include using half-baked pre-products, but twice baking results in excess moisture loss of the finished product which is a major problem for comparatively small products, moreover lasting long not more than a few hours. Another option is sometimes seen in frozen fully baked products, where, however the quality could be affected by condense management, and in general the product quality is very sensitive depending on how the process is managed. Glaced products might be degraded by their glacing melting during stocking. Moreover, this technology do not allow any claim concerning a daily fresh product.

Pastry products are generally understood to be products prepared from grains, such as corn, wheat, oat, usually in combination with leavening agents, emulsifiers, enzymes and various ingredients to produce refinements in flavor and character of the finished product. Examples are doughnuts, small cakes, sweet doughs, muffins and rolls.

US-A-5 846 585 mentions a method for keeping the freshness of breads which comprises starting the freezing of a bread immediately after baking when its surface temperature is 70°C or above and effecting the treatment for freezing at a given rate. It is further proposed to restore such frozen products by heating them in a microwave oven. Similarly, US-A-2006/0110495 teaches to reconstitute frozen taquitos in a microwave oven. However in general, microwave processing affects the product crust structure and therefore the final quality.

GB-A-1 506 677 discloses a process for preparing, storing and reconstituting bakery foods where then, said finished bakery foods are wrapped in a substantially moisture-proved package and frozen in the state. The finished bakery foods while frozen may be stored at a retail sales outlet and reconstituted there. This is done by subjecting said bakery foods to a temperature in the range of 200°F to 500°F and exposing said products not only to microwave radiation, but also to infrared radiation, the total energy level in the range of 0.25 to 2.10 Watt/minutes pro gram of said bakery foods and for a time period selected to substantially restore said products to their finished characteristics. In respect to intended applications of packed products, for consumption the days after preparation, the microwave would be not needed, therefore incurring only an additional cost.

However, a problem remains that the moisture management is not satisfactory. Further, starch retro-gradation has been observed.

The invention is defined in claim 1. Preferred embodiments are subject of the subclaims.

The invention solves the problems of the prior art by a method of preparing, stocking and reconstituting pastry products for retail sales or bakery chains by preparing a dough and molding said dough in a conventional manner; baking that molded dough until finished to obtain pastry products. Now, said finished pastry products are frozen immediately after baking when their internal temperature is 70°C or above. It has turned out that by freezing the warm semi-processed product reduced starch retro-gradation will occur, so that a fresher product is obtained. Freezing the warm product also avoids moisture loss during a cooling period, that have a double positive effect on cost and freshness improvement; on top of that it gives also a better protection from microbiological possible contamination. The frozen pastry products are stocked until they are needed. Then, they are further processed by exposing them to infrared radiation to superficially heating said frozen pastry products, and depositing icing or glacing on top of the products, when necessary. Thereafter, they are left to thaw to their ambient temperature. The time needed for thawing is generally less than the transfer period to retail sales outlets or bakery shops. By only superficially heating the product, not only the crust is refreshed, but any moisture lost is prevented, since the inner part of the pastry products is only allowed to thaw after the surface of the product has been dried out. Infrared treatment is also needed for a better sticking of the icing on top of the products.

Preferably the finished pastry products are shock frozen by cooling them to a core temperature of roundabout 5°C to 20°C or lower. Subsequently, they are deep frozen, preferably but not necessarily, to a temperature below the glassy transition temperature of the product, and it is also preferred, but not necessarily, that the frozen products are stocked below said glassy transition temperature where all reactions within the finished pastry product are blocked. Normally, the glassy transition temperature is below -20 or -30°C, depending on the ingredients of the component.

Infrared radiation in a wave length range of between 1.5 µm and 3.5 µm is suitable to achieve at surface temperatures sufficient to provide a crispy structure. These temperatures are generally higher than those utilized in conventional ovens. A high temperature at the surface of the pastry products due to the exposure to infrared radiation is also favorable for glacing or icing the pastry products. The intensity of the infrared radiation should be controlled to reach surface temperatures of 50 °C to 80 °C. The pastry products are maintained at this temperature range preferably for a period of 5 to 15 seconds.

Infrared processing may also be carried out after thawing the pastry products.

The infrared radiation may be applied intermittently or continuously.

Any dough may be used to practice the invention, for example yeast dough, danish pastry, batter dough, puff pastry dough. The pastry products can be filled with jam, custard, pudding or the like before baking as it is known in the art. Sugar, crumbs and other decorations are applied after infrared heating.
Bread could be processed in similar way as well.

### Example 1

Doughnuts were produced by dosing and combining 100 parts by weight of wheat flour, 3 parts by weight of sugar, 6 parts fat, 6 parts yeast, 1,5 parts salt, and 60 parts by weight of water to form a dough. The dough was kneaded, fermented, divided and moulded and subsequently fried in a conventional manner to obtain a plurality of doughnuts of substantially the same weight which after frying had been completed had a surface temperature of roundabout 98°C. Ten doughnuts were kept as a reference and were allowed to cool to room temperature. The other doughnuts were immediately shock frozen to a core temperature of -10°C at a freezing rate of 50 min. and then deep frozen to -20°C.

The frozen doughnuts were then subjected to infrared radiation of 10.000 Watt for 7 seconds. Finally, the doughnuts were left to thaw for six hours.

Sensoric main parameters of the doughnut were evaluated after one day production after thawing, compared with similar fresh product, and water content was measured using conventional equipment. The results are summarized in Table 1.

**Table 1**

| | Fresh | 1 day after thawing |
|---|---|---|
| Water content | 23% | 24% |
| Taste | reference | no difference vs fresh product |
| Freshness | reference | no difference vs fresh product |
| Appearance | reference | no difference vs fresh product |

### Example 2:

Danish Pastry, specifically Nußschnecken, were produced by dosing and combining 100 parts by weight of wheat flour, 8 parts by weight of sugar, 45 parts fat, 6 parts yeast, 1,5 parts salt, 35 parts by weight of water and 60 parts of nut filling to form a dough. The dough was kneaded, fermented, divided and moulded and subsequently baked in a conventional manner to obtain a Danish Pastry product of substantially the same weight which after baked had been completed had a surface temperature of roundabout 98°C. Ten Danish pastry were kept as a reference and were allowed to cool to room temperature. The other Danish Pastry were immediately shock frozen to a core temperature of -10°C at a freezing rate of 50 min. and then deep frozen to -20°C.

The frozen Danish Pastry were then subjected to infrared radiation of 10.000 Watt for 10 seconds. Finally, the Danish Pastry were left to thaw for six hours.

Sensoric main parameters of the doughnut were evaluated after one day production after thawing, compared with similar fresh product, and water content was measured using conventional equipment. The results are summarized in Table 2.

**Table 2**

| | Fresh | 1 day after thawing |
|---|---|---|
| Water content | 23% | 24% |
| Taste | reference | no difference vs fresh product |
| Freshness | reference | no difference vs fresh product |
| Appearance | reference | no difference vs fresh product |

The features disclosed in the foregoing description, in the claims and/or in the accompanying drawings may, both separately and in any combination thereof, be material for realising the invention in diverse forms thereof.

## Claims

1. A method of preparing, stocking and reconstituting pastry products for retail sales and bakery chains, comprising the steps of:
a) preparing a dough and moulding said dough;
b) baking said moulded dough until finished to obtain pastry products;
c) freezing said finished pastry products immediately after baking when their internal temperature is 70°C or above;
d) stocking said frozen pastry products;
e) processing said frozen pastry products by exposing them to infrared radiation to superficially heating said frozen pastry product;
f) leaving said processed pastry products to thaw to ambient temperature.

2. The method of claim 1, **characterized in that** step c) comprises:
c1) freezing said finished pastry products to a core temperature in the range of -0°C to -30°C and
c2) deep freezing said pastry products to a temperature below the glassy transition temperature of said pastry products.

3. The method of claim 1 further **characterized by** stocking said pastry products at a temperature below the glassy transition temperature of said pastry products.

4. The method of claim 1 further **characterized by** an infrared treatment of said pastry products after thawing.

5. The claim from 1 to 4 **characterized by** other bakery products, including bread and rolls.
